# EUROPEAN PATENT SPECIFICATION

(11) **EP 0 555 930 B1**
(45) Date of publication and mention of the grant of the patent: **23.07.1997**
(21) Application number: 93200384.1
(22) Date of filing: 11.02.1993
(51) Int. Cl.: C08L 23/08, C09D 123/08

(54) **Floor- and wall-covering formulations**
Formulieren zur Boden- und Wandbekleidung
Formulations de revêtement de sol et de mur

(30) Priority: 13.02.1992 EP 92200411; 13.02.1992 EP 92200412
(43) Date of publication of application: 18.08.1993
(73) Proprietor: SHELL INTERNATIONALE RESEARCH MAATSCHAPPIJ B.V., 2596 HR Den Haag (NL)
(72) Inventor: Vosters, Philippe, c/o Shell Research, B-1348 Ottignies, Louvain-la-Neuve (BE)

(56) References cited:
- EP-A- 0 273 516
- EP-A- 0 427 352
- DE-A- 2 321 514
- US-A- 4 216 131
- PATENT ABSTRACTS OF JAPAN vol. 008, no. 178 (C-238)1984

## Description

This invention relates to formulations for floor- and/or wall-covering.

Plasticized polyvinylchloride (PVC) is currently widely used in the floor-covering industry because it provides properties, which meet two major requirements for floor- and wall-coverings, namely a high scratch resistance and a smooth surface finish. Such PVC containing compositions as well as methods for the preparation thereof are described in e.g. U.S. Patents Nos. 3,761,555; 4,888,145 and 4,923,658 and in German Patents Nos. 1,679,822; 3,324,480 and 3,507,655.

However, due to the increasing environmental requirements, great interest exists for formulations which do not contain PVC. Particularly in view of incineration of waste floor- and wall-coverings, PVC containing formulations have to be avoided, because said incineration causes the formation of hydrochloric acid and other toxic, environmental charging ingredients.

Since most of the presently used PVC containing floor-coverings are calandered, floor-covering manufacturers prefer to use PVC-free formulations, which can also be calandered thereby avoiding reinvestments in other processing technology equipment.

Therefore it is an object of the present invention to provide a PVC-free formulation, which can be processed on the same equipment as most of the presently produced PVC containing floor-coverings.

It is another object of the present invention to provide a floor-covering formulation having a good processability, which is environmental friendly and may be partially recyclable if desired.

It is still another object of the present invention to provide a floor- and/or wall-covering formulation having a high scratch resistance and a smooth surface finish.

PVC-free floor- and wall-coverings are known from European Patent Application No. 0,321,760, disclosing homogenous synthetic materials comprising (i) a binding material consisting essentially of ethylene-vinylacetate copolymer (EVA) and optionally polypropylene with minor amounts of an ethylene-propylene diene copolymer (EPDM) and polyethylene, (ii) a filler material, (iii) a colouring agent and optionally (iv) minor amounts of additives such as antistatica and antioxidantia.

Said synthetic materials, however, are rather stiff due to the presence of both homopolypropylene and EPDM. Moreover, these synthetic materials have a rather high density and consequently the processability leaves much to be desired. In particular in wall-covering applications the high density may cause problems in glueing the wall-covering onto the wall. Furthermore, said high density is undesired in view of transporting and handling the floor- and/or wall covering material.

As a result of extensive research and experimentation a PVC-free formulation was surprisingly found showing improved processability and a relatively low density, which can be processed on the same equipment as the PVC-containing formulations. More particularly, a PVC-free formulation was found comprising at least a thermoplastic rubber and a polyisobutylene, resulting in a floor- and/or wall-covering formulation having excellent scratch resistance and surface finish as well as a relatively low density.

Accordingly, the present invention is relating to floor- and/or wall-covering formulations comprising:
(a) 100 parts by weight of an optionally functionalized, linear or star-shaped block copolymer containing at least one block A derived from predominantly a monoalkenyl aromatic compound having a number average molecular weight in the range of from 3,000 to 40,000, and at least one block B derived from predominantly conjugated diene having a number average molecular weight in the range of from 20,000 to 100,000, said block copolymer optionally being selectively hydrogenated whereby at least 80% of the aliphatic double bonds in the B blocks(s) has been hydrogenated, whereas not more than 20% of the aromatic unsaturation has been hydrogenated and said block copolymer having a bound monoalkenyl aromatic content in the range of from 10 to 70% by weight;
(b) 100-400 parts by weight of polyethylene or a copolymer of ethylene and propylene having a melt index in the range of from 0.1 to 30 dg/min;
(c) 300-900 parts by weight of a functionalized polyalkylene;
(d) 5-150 parts by weight of polyisobutylene having an average viscosity molecular weight in the range of from 40,000 to 5,000,000;
(e) 100-1500 parts by weight of a filler; and
(f) 0-50 parts by weight of additives, such as antioxidants, flame retarders, antistatica, colouring agents and stabilizers.
It will be appreciated that components (a), (b), (c) and (d) together form the binder material for components (e) and (f). However, component (c) is the main binding component due to the presence of functional groups.

With the terms "predominantly a monoalkenyl aromatic compound" and "predominantly a conjugated diene" as used throughout the present specification in connection with the composition of the polymer blocks of the block copolymer, are meant that respectively the monoalkenyl aromatic compound and the conjugated diene are present in the polymer block under consideration in an amount of at least 80% by weight based on said polymer block. The remaining 20% by weight or less consists of conjugated diene monomer in the case of a monoalkenyl aromatic polymer block and of monoalkenyl aromatic monomer in the case of a conjugated diene polymer block. Preferably, these (co)monomers are similar to those actually incorporated in the poly(conjugate diene) and poly(monoalkenyl aromatic) blocks.

The poly(monoalkenyl aromatic) block(s) can be derived from styrene, α-methylstyrene, o-methylstyrene, p-methylstyrene, p-tert-butylstyrene, 1,3-dimethylstyrene or mixtures thereof, of which styrene is the preferred monomer.

The poly(conjugated diene) block(s) can be derived from 1,3-butadiene, 2-ethyl-1,3-butadiene (isoprene), 2,3-dimethyl-1,3-butadiene, 1,3-pentadiene, 1,3-hexadiene or mixtures thereof, of which 1,3-butadiene, isoprene or mixtures thereof are the preferred monomers, whereas 1,3-butadiene is the most preferred monomer.

Preferably block copolymers are applied as component (a), which contain blocks derived from one substantially pure monoalkenyl aromatic monomer and from one substantially pure conjugated diene monomer. Such block copolymers may be linear or branched. Suitable, commercially available, block copolymers are CARIFLEX TR-1101, TR-1102, TR-1107, TR-1184 or TR-1186 (CARIFLEX is a trade mark).

More preferably linear triblock copolymers containing two polystyrene endblocks and one poly(1,3-butadiene) or polyisoprene midblock, such as CARIFLEX TR-1101, TR-1102 or TR-1107, are used.

The block copolymers to be used as component (a) can be prepared by methods known in the art, such as disclosed in U.S. Patents Nos. 3,030,346; 3,231,635; 3,265,765; 3,281,383; 3,333,024; 3,639,521 and 3,700,633.

The block copolymers as described hereinbefore to be useful as component (a) may be selectively hydrogenated, whereby at least 80% of the aliphatic double bonds in the B block(s) has been hydrogenated, whereas not more than 20% of the aromatic unsaturation has been hydrogenated. Preferably, at least 90% of the aliphatic double bonds in the B block(s) has been hydrogenated, more preferably at least 95% and most preferably at least 99%.

Block copolymers as described above, which contain 0.01 to 20 mole %, preferably 0.1 to 10 mole %, of at least one functional group may also be applied as component (a). Preferably, said functional group is selected from the group consisting of hydroxyl groups, epoxy groups and carboxyl groups or derivatives thereof, such as anhydride groups. More preferably, said functional group is a carboxyl group or a derivative thereof of which acrylic acid, methacrylic acid and maleic acid and their derivatives are most preferred.

Component (b), i.e. polyethylene or a copolymer of ethylene and propylene, is added to the formulation in order to improve its processability while at the same time providing sufficient hardness to the final composition. Component (b) preferably is present in an amount of from 150 to 250 parts by weight per 100 parts by weight of block copolymer. The melt index is measured under a load of 2.16 kg at 230°C for the ethylene-propylene copolymer and at 180°C for polyethylene and preferably is in the range of from 5 to 25 dg/min.

In a preferred embodiment of the present invention high density polyethylene, such as HDPE 6201 (Exxon), or a copolymer of propylene and ethylene, such as PP HER6300 (Shell), is used as component (b), since these polymers have better processability characteristics than e.g. homopolypropylene. In this respect a copolymer of propylene and ethylene is most preferred.

Component (c), i.e. a functionalized polyalkylene, consists of a polyalkylene backbone to which functional groups have been attached. The functionalized polyalkylene to be used must be capable of bonding the different components together by interacting with these components via its functional groups, due to which a homogeneous formulation is formed. Consequently, sufficient functional groups must have been attached to the polyalkylene backbone for interacting with the different components. In this connection a functionalized polyethylene is preferred. A preferred functionalized polyethylene is an Ethylene-VinylAcetate (EVA) copolymer, such as ESCORENE UL 00119, ESCORENE UL 00728 or RIBLENE DJV 1055X (ESCORENE and RIBLENE are trade marks). Another preferred functionalized polyethylene is an ethylene-ethylacrylate copolymer.

Component (c) is present in an amount of from 300 to 900 parts by weight per 100 parts by weight of block copolymer, and preferably in an amount of from 450 to 800 parts by weight per 100 parts by weight of block copolymer.

Component (d), i.e. polyisobutylene having an average viscosity molecular weight in the range of from 40,000 to 5,000,000 and preferably of from 1,000,000 to 3,500,000, was surprisingly found to provide superior surface characteristics as well as an improved elasticity to the final composition.

Component (d) provides a very smooth surface, which, of course, is an attractive property for floor- and/or wall-coverings, for example in view of cleaning. In addition, the stiffness of the final formulation highly depends on the amount of component (d) incorporated in said formulation. A too low amount would result in a formulation being too stiff, whereas a too high amount would result in a formulation being too soft. Preferably, said component (d) is present in an amount of from 10 to 100 parts by weight, and more preferably 20 to 80 parts by weight, per 100 parts by weight of block copolymer. Suitable, commercially available, polyisobutylenes are OPPANOL B150 and OPPANOL B100 (OPPANOL is a trade mark).

As component (e) organic as well as inorganic fillers can be used, which are well known in the art. Examples of such fillers are calcium carbonate, talc powder, clay, kaolin, mica, barytes, silica, bentonites, barium sulphate, magnesium hydroxide, cork powder and mixtures thereof. Of these fillers calcium carbonate is most preferred. Commercially available calcium carbonate fillers are e.g. OMIYA 2000, JURAPERLE MHM and CALCILIT 8 (OMIYA, JURAPERLE and CALCILIT are trade marks).

The filler may be present in an amount which may vary over a rather large range, i.e. of from 100 to 1500 parts by weight per 100 parts by weight of block copolymer. In a preferred embodiment, the filler is present in an amount of from 700 to 1200 parts by weight per 100 parts by weight of block copolymer.

In addition to the above discussed components, other usual additives may be present too as component (f) of the formulation in a total amount of from 0 to 50 parts by weight per 100 parts by weight of block copolymer. Such additives may be antioxidants, colouring agents, antistatica, flame retarders and/or stabilizing agents.

Preferred antioxidants to be used in formulations of the present invention are IRGANOX 565 and IRGANOX 1010, whereas preferred UV-stabilizers are TINUVIN P and TINUVIN 770 (IRGANOX and TINUVIN are trade marks).

The formulations of the present invention can be prepared by methods known in the art, for instance methods described by U.S. Patents Nos. 3,761,555; 4,888,145 and 4,923,658 and German Patent Applications Nos. 1,679,822 and 3,324,480. A preferred method is mixing the components in their respective amounts in a high shear mixing apparatus at an elevated temperature (e.g. 180-200 °C) and subsequently rolling the plasticized blend thus obtained, e.g. by a Calender roller. An example of a suitable high shear mixing apparatus is a Banburry mixer.

It is true that several PVC-free formulations, which may be applied in the floor-covering business, were already known. For example, from Japanese Patent Application No. 60-034682 a floor material is known, which is prepared by adding a minor amount of a homo- or copolymer of isobutylene to a crosslinkable rubber and/or a thermoplastic rubbery polymer. This blend subsequently can be vulcanized using a crosslinking agent, due to which a stiff three-dimensional network is formed. The floor material thus obtained is very hard and difficult to process.

It will be appreciated that any floor- or wall-covering comprising the formulation according to the present invention falls within the scope of the present invention.

The invention is illustrated by the following examples without restricting the scope of the invention to these embodiments.

### EXAMPLE 1

All ingredients of Formulation I, as specified in Table I, were led into a Banburry mixer, which had been preheated to 100 °C. Subsequently, mixing took place at a temperature between 180 and 200 °C. The formulation thus obtained was calendered resulting in a sheet having a thickness of 1.65 mm.

### EXAMPLE 2 AND COMPARATIVE EXAMPLES 1 TO 3

In the same way as described in Example 1, Formulation II and Comparative Formulations A to C were prepared. The sheets of Formulation II and Comparative Formulations A to C all had a thickness of 1.55 mm. after being calendered.

The compositions of all formulations as well as their surface appearance and scratch resistance are listed in Table I.

**Table I**

| Composition, surface appearance and scratch resistance | | | | | |
|---|---|---|---|---|---|
| Formulation | I | II | A | B | C |
| TR-1102 | 100 | 100 | | 100 | 100 |
| TR-4113* | | | 100 | | |
| PS 2000N* | | | 67 | | |
| PP KY6100* | | | | 67 | |
| PP HER6300 | 200 | | | | 200 |
| HDPE 6201 | | 200 | | | |
| EVA UL00119 | 650 | 650 | | | 650 |
| Shellflex 4510* | | | 8.3 | 8.3 | 50 |
| Oppanol B150 | 50 | 50 | | | |
| OMIYA 200 | 1000 | 1000 | 83 | 83 | 1000 |
| Irganox 565 | 1 | 1 | 0.17 | 0.17 | 1 |
| Tinuvin P | 3 | 3 | 0.5 | 0.5 | 3 |
| Surface App.** | +++ | ++ | -- | -- | -- |
| Scratch Res.** | ++ | ++ | --- | --- | + |

| | | | | | |
|---|---|---|---|---|---|
| * CARIFLEX TR-4113 is an oil extended, linear S-B-S block copolymer; Shell PS 2000N is a polystyrene grade from Shell; Shell PP KY6100 is a homopolypropylene grade from Shell; Shellflex 4510 is an aromatic oil from Shell (Shellflex is a trade mark) | | | | | |
| ** +++ very good ++ good + poor --- very bad -- bad - very poor | | | | | |

The polyisobutylene used, i.e. Oppanol B150, has an average viscosity molecular weight of 2,800,000, which corresponds with a weight average molecular weight of 1,752,000.

Formulations I and II were compared with Mipolam 900 (Mipolam is a trade mark), a commercially available PVC-free floor-covering formulation. Several properties of both formulations and Mipolam 900 were measured and compared. The results are listed in Table II.

**Table II**

| Comparison with Mipolam 900 | | | |
|---|---|---|---|
| Property | Formulation | | Mipolam 900 |
| | I | II | |
| Thickness (mm) | 1.65 | 1.55 | 2.08 |
| Weight (g/m²) | 2359 | 2160 | 3391 |
| Density (g/m³) | 1.42 | 1.39 | 1.63 |
| Tensile strength at yield (N/cm) | 74 | 81 | 114 |
| Tensile strength at break (N/cm) | 111 | 104 | 176 |
| Elongation at break (%) | 24 | 21 | 20 |
| Tensile modulus (N/cm²) | 18 | 13 | 18 |
| Tear strength (gf) | >6400 | >6400 | >6400 |
| | | | |
| L & W Stiffness: | | | |
| Bending force at 15° bend (Nm) | 370 | 430 | 716 |
| Modulus (MN/m²) | 166 | 255 | 152 |

Tensile strength at yield and at break, as well as Elongation at break and Tensile modulus were measured according to test standard DIN53455. Tear strength was measured according to DIN53128 and L & W Stiffness according to DIN53121.

From Table II it becomes clear that Formulation I, containing the ethylene-propylene copolymer as component (b), shows the best results in comparison with Mipolam 900. Regardless the lower density and thickness of Formulation I, resulting in a considerably lower weight per square meter, properties such as elongation at break, tensile modulus and tear strength as well as the L & W stiffness modulus are comparable with those of Mipolam 900. In addition, due to said lower density and thickness, the tensile strength at yield, the tensile strength at break and the bending force at 15° bend are lower than those of Mipolam 900, resulting in a somewhat less stout formulation.
As to Formulation II it can be seen that this formulation is more stiff than Formulation I due to the presence therein of polyethylene instead of an ethylene-propylene copolymer as component (b). However, its properties still are acceptable bearing in mind the low values of thickness and density.

In conclusion, it will be appreciated that the floor- and wall-covering formulations according to the present invention primarily are advantageous over previous formulations on the one hand in that they are much easier to handle due to their relatively low density while showing comparable properties, on the other hand in that they are completely recyclable as no vulcanized or otherwise crosslinked components, such as e.g. EPDM rubbers, are present. In this connection it is also noted that no toxic components will be emitted in waste handling the formulations according to the present invention by means of incineration.

## Claims

1. A floor- and/or wall-covering formulation comprising:
(a) 100 parts by weight of an optionally functionalized, linear or star-shaped block copolymer containing at least one block A derived from predominantly a monoalkenyl aromatic compound having a number average molecular weight in the range of from 3,000 to 40,000, and at least one block B derived from predominantly conjugated diene having a number average molecular weight in the range of from 20,000 to 100,000, said block copolymer optionally being selectively hydrogenated whereby at least 80% of the aliphatic double bonds in the B blocks(s) has been hydrogenated, whereas not more than 20% of the aromatic unsaturation has been hydrogenated and said block copolymer having a bound monoalkenyl aromatic content in the range of from 10 to 70% by weight;
(b) 100-400 parts by weight of polyethylene or a copolymer of ethylene and propylene having a melt index in the range of from 0.1 to 30 dg/min;
(c) 300-900 parts by weight of a functionalized polyalkylene;
(d) 5-150 parts by weight of polyisobutylene having an average viscosity molecular weight in the range of from 40,000 to 5,000,000;
(e) 100-1500 parts by weight of a filler; and
(f) 0-50 parts by weight of additives, such as antioxidants, flame retarders, antistatica, colouring agents and stabilizers.

2. A composition according to claim 1, characterised in that component (a) is a linear triblock copolymer having two endblocks A derived from predominantly a monoalkenyl aromatic compound and one midblock B derived from predominantly a conjugated diene.

3. A composition according to claim 1 or 2, characterised in that the monoalkenyl aromatic compound is styrene and the conjugated diene is butadiene.

4. A composition according to any of the claims 1 to 3, characterised in that component (a) contains 0.01 to 20 mole % of at least one functional group.

5. A composition according to claim 4, characterised in that the functicnal group is selected from the group consisting of hydroxyl groups, epoxy groups and carboxyl groups or derivatives thereof.

6. A composition according to claim 5, characterised in that the functional group is selected from the group consisting of acrylic acid, methacrylic acid and maleic acid or derivatives thereof.

7. A composition according to claim 1, characterised in that at least 99% of the aliphatic double bonds in the B block(s) has been hydrogenated.

8. A composition according to claim 7, characterised in that component (a) is a linear triblock copolymer having two endblocks A derived from predominantly a monoalkenyl aromatic compound and one mdiblock B derived from predominantly a conjugated diene.

9. A composition according to any of the claims 1 to 8, characterised in that component (b) is present in an amount of from 150 to 250 parts by weight.

10. A composition according to any of the claims 1 to 9, characterised in that component (b) is a copolymer of ethylene and propylene.

11. A composition according to any of the claims 1 to 10, characterised in that component (c) is an ethylene vinyl acetate copolymer.

12. A composition according to any of the claims 1 to 11, characterised in that component (d) has an average viscosity molecular weight in the range of from 1,000,000 to 3,500,000.

13. A composition according to any of the claims 1 to 12, characterised in that calcium carbonate is used as the filler material.

14. Floor- and wall-coverings containing a composition according to any of the claims 1 to 13.

## Patentansprüche

1. Bodenbelags- und/oder Wandbekleidungsformulierungen, umfassend:
(a) 100 Gew.-Teile eines gegebenenfalls funktionalisierten, linearen oder sternförmigen Blockcopolymers mit einem Gehalt an wenigstens einem Block A, der überwiegend von einer monoalkenylaromatischen Verbindung abgeleitet ist und ein zahlenmittleres Molekulargewicht im Bereich von 3.000 bis 40.000 aufweist, und mit einem Gehalt an wenigstens einem Block B, der überwiegend von einem konjugierten Dien abgeleitet ist und ein zahlenmittleres Molekulargewicht im Bereich von 20.000 bis 100.000 aufweist, wobei dieses Blockcopolymer gegebenenfalls selektiv hydriert ist, wobei wenigstens 80 % der aliphatischen Doppelbindungen im Block B oder in den Blöcken B hydriert worden sind, wogegen nicht mehr als 20 % der aromatischen Unsättigung hydriert worden ist und wobei das Blockcopolymer einen Gehalt an gebundener monoalkenylaromatischer Verbindung im Bereich von 10 bis 70 Gew.-% aufweist;
(b) 100 bis 400 Gew.-Teile Polyethylen oder eines Copolymers aus Ethylen und Propylen mit einem Schmelzindex im Bereich von 0,1 bis 30 dg/min;
(c) 300-900 Gew.-Teile eines funktionalisierten Polyalkylens;
(d) 5-150 Gew.-Teile Polyisobutylen mit einem viskositätsmittleren Molekulargewicht im Bereich von 40.000 bis 5,000.000;
(e) 100-1500 Gew.-Teile eines Füllstoffes; und
(f) 0-50 Gew.-Teile an Additiven, wie Antioxidantien, Flammverzögerern, Antistatica, Färbemittel und Stabilisatoren.

2. Zusammensetzung nach Anspruch 1, dadurch gekennzeichnet, daß die Komponente (a) ein lineares Dreiblock-Copolymer ist, das zwei Endblöcke A, die überwiegend von einer monoalkenylaromatischen Verbindung abgeleitet sind, und einen Mittelblock B aufweist, der überwiegend von einem konjugierten Dien abgeleitet ist.

3. Zusammensetzung nach Anspruch 1 oder 2, dadurch gekennzeichnet, daß die monoalkenylaromatische Verbindung Styrol ist und das konjugierte Dien Butadien ist.

4. Zusammensetzung nach einem der Ansprüche 1 bis 3, dadurch gekennzeichnet, daß die Komponente (a) 0,01 bis 20 Mol-% wenigstens einer funktionellen Gruppe enthält.

5. Zusammensetzung nach Anspruch 4, dadurch gekennzeichnet, daß die funktionelle Gruppe aus der Gruppe ausgewählt ist, die aus Hydroxylgruppen, Epoxygruppen und Carboxylgruppen oder Derivaten hievon besteht.

6. Zusammensetzung nach Anspruch 5, dadurch gekennzeichnet, daß die funktionelle Gruppe aus der Gruppe ausgewählt ist, die aus Acrylsäure, Methacrylsäure und Maleinsäure oder Derivaten hievon besteht.

7. Zusammensetzung nach Anspruch 1, dadurch gekennzeichnet, daß wenigstens 99 % der aliphatischen Doppelbindungen im Block B bzw. in den Blöcken B hydriert worden sind.

8. Zusammensetzung nach Anspruch 7, dadurch gekennzeichnet, daß die Komponente (a) ein lineares Dreiblock-Copolymer ist, das zwei Endblöcke A, die vorwiegend von einer monoalkenylaromatischen Verbindung abgeleitet sind, und einen Mittelblock B aufweist, der vorwiegend von einem konjugierten Dien abgeleitet ist.

9. Zusammensetzung nach einem der Ansprüche 1 bis 8, dadurch gekennzeichnet, daß die Komponente (b) in einer Menge von 150-250 Gew.-Teilen vorliegt.

10. Zusammensetzung nach einem der Ansprüche 1 bis 9, dadurch gekennzeichnet, daß die Komponente (b) ein Copolymer aus Ethylen und Propylen ist.

11. Zusammensetzung nach einem der Ansprüche 1 bis 10, dadurch gekennzeichnet, daß die Komponenten (c) ein Ethylenvinylacetat-Copolymer ist.

12. Zusammensetzung nach einem der Ansprüche 1 bis 11, dadurch gekennzeichnet, daß die Komponente (d) ein viskositätsmittleres Molekulargewicht im Bereich von 1,000.000 bis 3,500.000 aufweist.

13. Zusammensetzung nach einem der Ansprüche 1 bis 12, dadurch gekennzeichnet, daß als Füllstoff Calciumcarbonat verwendet wird.

14. Bodenbeläge und Wandbekleidungen mit einem Gehalt an einer Zusammensetzung nach einem der Ansprüche 1 bis 13.

## Revendications

1. Composition de revêtements de sols et/ou de murs, qui comprend :
(a) 100 parties en poids d'un copolymère séquencé, linéaire ou étoilé, éventuellement fonctionnalisé, contenant au moins une séquence A dérivée de manière prédominante d'un composé monoalcénylaromatique possédant un poids moléculaire moyen en nombre qui varie de 3.000 à 40.000 et au moins une séquence B dérivée de manière prédominante d'un diène conjugué possédant un poids moléculaire moyen en nombre qui varie de 20.000 à 100.000, ledit copolymère séquencé ayant éventuellement été sélectivement hydrogéné, de manière qu'au moins 80% des doubles liaisons aliphatiques dans la ou les séquences B aient été hydrogénées, tandis que pas plus de 20% de l'insaturation aromatique aient été hydrogénés et ledit copolymère séquencé possédant une teneur en composés monoalcényl-aromatiques liés qui fluctue de 10 à 70% en poids,
(b) 100 à 400 parties en poids de polyéthylène ou d'un copolymère de l'éthylène et du propylène possédant un indice de fusion qui fluctue de 0,1 à 30 dg/min.,
(c) 300 à 900 parties en poids d'un polyalkylène fonctionnalisé,
(d) 5 à 150 parties en poids de polyisobutylène possédant un poids moléculaire par viscosité moyen qui varie de 40.000 à 5.000.000,
(e) 100 à 1500 parties en poids d'une charge et
(f) 0 à 50 parties en poids d'additifs, comme des antioxydants, des agents de retardement de l'inflammation, des antistatiques, des agents colorants et des stabilisateurs.

2. Composition suivant la revendication 1, caractérisée en ce que le composant (a) est un copolymère à trois séquences linéaire possédant deux séquences terminales A, dérivé de manière prédominante d'un composé monoalcénylaromatique et une séquence médiane B, dérivée de manière prédominante d'un diène conjugué.

3. Composition suivant la revendication 1 ou 2, caractérisée en ce que le composé monoalcénylaromatique est le styrène et le diène conjugué est le butadiène.

4. Composition suivant l'une quelconque des revendications 1 à 3, caractérisée en ce que le composant (a) contient de 0,01 à 20% molaires d'au moins un groupe fonctionnel.

5. Composition suivant la revendication 4, caractérisée en ce que le groupe fonctionnel est choisi parmi les radicaux hydroxyle, les radicaux époxy et les radicaux carboxyle ou leurs dérivés.

6. Composition suivant la revendication 5, caractérisée en ce que le groupe fonctionnel est choisi parmi l'acide acrylique, l'acide méthacrylique est l'acide maléique, ou leurs dérivés.

7. Composition suivant la revendication 6, caractérisée en ce qu'au moins 99% des doubles liaisons aliphatiques dans la ou les séquences B ont été hydrogénées.

8. Composition suivant la revendication 7, caractérisée en ce que le composant (a) est un copolymère à trois séquences linéaire possédant deux séquences terminales A, dérivées de manière prédominante d'un composé monoalcénylaromatique et une séquence médiane B, dérivée de manière prédominante d'un diène conjugué.

9. Composition suivant l'une quelconque des revendications 1 à 8, caractérisée en ce que le composant (b) est présent en une proportion de 150 à 250 parties en poids.

10. Composition suivant l'une quelconque des revendications 1 à 9, caractérisée en ce que le composant (b) est un copolymère de l'éthylène et du propylène.

11. Composition suivant l'une quelconque des revendications 1 à 10, caractérisée en ce que le composant (c) est un copolymère de l'éthylène et de l'acétate de vinyle.

12. Composition suivant l'une quelconque des revendications 1 à 11, caractérisée en ce que le composant (d) possède un poids moléculaire par viscosité moyen qui varie de 1.000.0000 à 3.500.000.

13. Composition suivant l'une quelconque des revendications 1 à 12, caractérisée en ce que l'on utilise le carbonate de calcium, à titre de matière de charge.

14. Revêtements de sols et de murs contenant une composition suivant l'une quelconque des revendications 1 à 13.
